# EUROPEAN PATENT APPLICATION

(11) **EP 3 432 385 A1**
(43) Date of publication of application: **23.01.2019**
(21) Application number: 18186185.7
(22) Date of filing: 27.07.2018
(51) Int. Cl.: H01M 2/16, H01M 4/38, H01M 4/50, H01M 4/52, H01M 4/58, H01M 4/583, H01M 10/0567, H01M 10/0568, H01M 10/0569, H01M 4/505, H01M 4/587, H01M 4/66, H01M 10/054

(54) **AN ENERGY STORAGE SYSTEM**

(71) Applicant: High Tech Battery Inc., 110 Taipei City (TW)
(72) Inventor: WANG CHEN, Kuei Yung, 110 Taipei City (TW)
(74) Representative: Carpmael, Robert Maurice Charles

(57) **Abstract**

A metal-ion energy storage system comprising positive and negative electrodes, a separator is provide therebetween the positive and negative electrodes, an electrolyte formed from a mixture of imidazole salt and a main metal halogen, wherein the electrolyte further includes an additive other than the main metal halogen.

## Description

The present invention relates to a battery for use as rechargeable energy storage, for example particularly, but not exclusively, an energy storage with enhanced electrochemical performance.

### BACKGROUND OF THE INVENTION

Metal ion battery shapes the future of energy storage. There is a drive to develop smaller and lighter batteries with high energy density at relatively low costs. The specific capacity (mAh/g) of the metal ion battery is determined by the electrode, which relates to the amount of an electrode active material that can be reversibly intercalated/de-intercalated and the weight of the electrode active material.

Electrodes with layered structure usually forming on a current collector that undergo good intercalation and de-intercalation of ions in the charging and discharging process. The easiness of the access of ions contributes to the electrochemical performance of the battery. Also the stability of the electrode is of importance. Current collector must be electrochemically stable when in contact with the battery component during the potential operation windows of the electrode. Continue corrosion of current collector lead to increase the internal resistance of the battery, which causes the capacity decline. Corrosion of the current collector may cause short-circuit, This raises doubts about the safety of the battery.

The invention seeks to offer an improvement to the existing battery arrangement at a reasonable cost.

### SUMMARY OF THE INVENTION

In a first aspect of the invention there is provided a metal-ion energy storage system comprising positive and negative electrodes, a separator is provide therebetween the positive and negative electrodes, an electrolyte formed from a mixture of imidazole salt and a main metal halogen, wherein the electrolyte further includes an additive other than the main metal halogen. Preferably, the positive electrode comprises a current collector and at least one active material. More preferably, the current collector is nickel and the active material is selected from a group consisting graphite, Mxene, LiFePO₄, LiMnO₂, LiMn₂O₄, Li₃V₂(PO₄)₃ and Na₃V₂(PO₄)₃. Yet more preferably, the separator is a porous membrane which is made from a material selected from a group consisting PTFE, PAN, glass fiber and PI. It is preferable that the main metal halogen comprises a metal halogen selected from a group consisting AlCl₃, LiCl, NaCl and MgCl₂. More preferably the main metal halogen is a combination of metal halogens selected from a group consisting AlCl₃, LiCl, NaCl and MgCl₂. In the preferred embodiment, the main metal halogen comprises AlCl₃ and the imidazole salt comprises EMIC, the molar ratio of AlCl_{3/}EMIC is 1.1∼2.2. Advantageously, the additive comprises at least one support metal halogen having an intercalation voltage smaller than that of the main metal halogen. More advantageously, the halogen in the main and support metal halogens is selected from a group consisting F, Cl, Br and I. Yet more preferably, the additive comprises a rare earth halogen. In the preferred embodiment, the additive comprises an organic solvent. Advantageously, the additive comprises a mixture of any two or more of the additive selected from a group consisting a support metal halogen, a rare earth halogen and an organic solvent. More advantageously, the support metal halogens are selected from a group consisting SnCl₂, BiCl₃, ZnCl₂ and GaCl₃. Yet more advantageously, the amount of SnCl₂, BiCl₃ or GaCl₃ used as an additive is at or below 10000ppm respectively. Preferably, the amount of ZnCl₂ used as an additive is at or below 5000ppm. More preferably, the rare earth halogen is selected from a group consisting YCl₃ and LaCl₃, Yet more preferably, the amount of YCl₃ used as an additive is at or below 5000ppm. It is preferable that the amount of LaCl₃ used as an additive is at or below 5000ppm. It is advantageous that the organic solvent is selected from a group consisting cyclic ether and alkyl amide. Preferably, the cyclic ether comprises THF. More preferably, the alkyl amide comprises Dimethylacetamide (DMAC). Yet more preferably, the amount of THF used as an additive is 600ppm-50000ppm. It is preferable that the amount of DMAC used as an additive is 1000ppm-50000ppm. Preferably, the negative electrode comprises Aluminum.

### BRIEF DESCRIPTION OF DRAWINGS

The invention will now be more particularly described, by way of example only, with reference to the accompanying drawings, in which:
Figure 1 is a Cyclic Voltammogram(CV) plot of a 3-electrode test showing influence on a pyrolytic graphite working electrode (analog battery positive electrode) when the electrolyte contains or does not contain Tim Chloride (SnCl₂) as an additive; the 3-electrode test only tests the positive electrode and is targeted at testing the electrical performance between positive electrode and an electrolyte.
Figure 2 is a CV plot of a battery test of a metal-ion battery with SnCl₂ additive after 8000 cycle;
Figure 3 is a CV plot of a three electrode test showing influence on a pyrolytic graphite working electrode when the electrolyte contains or does not contain Bismuth Chloride (BiCl₃) as an additive;
Figure 4 is a CV plot of a three electrode test showing influence on a pyrolytic graphite working electrode when the electrolyte contains or does not contain Gallium Trichloride(GaCl₃) as an additive-;
Figure 5 is a CV plot of a three electrode test showing influence on a pyrolytic graphite working electrode when the electrolyte contains or does not contain Zinc Chloride (ZnCl₂) as an additive;
Figure 6 is a table showing the pre-intercalation voltage, side reaction, solubility (ppm), price and a recommended operating voltage range (V) of respective support metal halogens in a AlCl_{3/}EMIC electrolyte;
Figure 7 is a CV plot of a battery test of a metal-ion battery with Tetrahydrofuran(THF) as an additive;
Figure 8 is a linear sweep voltammetry (LSV) graph measuring the current at a working electrode (cathode) resulting from side effect of Ni at different concentrations of THF by sweeping linearly in time the potential between the cathode and the reference electrode at room temperature with a sweep rate of 1mV/s, the working electrode (cathode) comprises Ni as the current collector, the reference electrode comprises Al and the electrolyte comprises a molar ratio AlCl_{3/}EMIC=1.1;
Figure 9 is a linear sweep voltammetry graph measuring the current at a working electrode (Cathode) resulting from side effect of Ni at different concentrations of THF by sweeping linearly in time the potential between the cathode and the reference electrode at room temperature with a sweep rate of 1mV/s, the working electrode (cathode) comprises Ni as the current collector, the reference electrode comprises Al and the electrolyte comprises a molar ratio AlCl_{3/}EMIC=1.5 and 1M of Lithium Chloride(LiCl);
Figure 10 is a CV plot of a battery test of a metal-ion battery with dimethylacetamide(DMAC) as an additive;
Figure 11 is a linear sweep voltammetry (LSV) graph measuring the current at a working electrode (cathode) resulting from side effect of Ni at different concentrations of DMAC by sweeping linearly in time the potential between the cathode and the reference electrode at room temperature with a sweep rate of 1mV/s, the working electrode (cathode) comprises Ni as the current collector, the reference electrode comprises Al and the electrolyte comprises a molar ratio AlCl_{3/}EMIC=1.1;
Figure 12 is a linear sweep voltammetry graph measuring the current at a working electrode (Cathode) resulting from side effect of Ni at different concentrations of DMAC by sweeping linearly in time the potential between the cathode and the reference electrode at room temperature with a sweep rate of 1mV/s, the working electrode (cathode) comprises Ni as the current collector, the reference electrode comprises Al and the electrolyte comprises a molar ratio AlCl_{3/}EMIC=1.5 and 1M of Lithium Chloride(LiCl);
Figure 13 is a CV plot of a battery test of a metal-ion battery with Yttrium Chloride(YCl₃) as an additive;
Figure 14 is a linear sweep voltammetry (LSV) graph measuring the current at a working electrode (cathode) resulting from side effect of Ni at different concentrations of YCl₃ by sweeping linearly in time the potential between the cathode and the reference electrode at room temperature with a sweep rate of 1mV/s, the working electrode (cathode) comprises Ni as the current collector, the reference electrode comprises Al and the electrolyte comprises a molar ratio AlCl_{3/}EMIC=1.1;
Figure 15 is a CV plot of a battery test of a metal-ion battery with Lanthanum Chloride(LaCl₃) as an additive;
Figure 16 is a linear sweep voltammetry (LSV) graph measuring the current at a working electrode (cathode) resulting from side effect of Ni at different concentrations of LaCl₃ by sweeping linearly in time the potential between the cathode and the reference electrode at room temperature with a sweep rate of 1mV/s, the working electrode (cathode) comprises Ni as the current collector, the reference electrode comprises Al and the electrolyte comprises a molar ratio AlCl_{3/}EMIC=1.1; and
Figure 17 is a table showing the amount (ppm) and the optimal amount(ppm) of respective additives, including SnCl₂, BiCl₃, GaCl₃, ZnCl₂, THF, DMAC, YCL₃ and LaCl₃ to be introduced into the electrolyte of a battery.

### DETAILED DESCRIPTION OF PREFERRED EMBODIMENT

The present invention is described in further details below referring to the preferred embodiments according to the present invention. It should be understood, however that the present invention is not to be construed as being limited thereto.

The invention involves the use of additive for improving the stability and efficiency of an energy storage device which comprises a metal ion battery.

More specifically, one or more additive is introduced into the electrolyte to improve the performance of the cathode (positive electrode) immersed therein and/or to neutralize any undesirable effect resulting from reaction of the base material which is preferably a current collector in the cathode with the material in the electrolyte.

In general, metal ion battery comprises a cathode, an anode, a separator provided therebetween and an electrolyte all contained in a sealed casing. The cathode is formed from a current collector and at least one active material. The active material, may be graphite, Mxene, LiFePO₄, LiMnO₂, LiMn₂O₄, Li₃V₂(PO₄)₃ and Na₃V₂(PO₄)₃, which is mixed with a solvent and an adhesive as well as conductive carbon powder to form paste. Layers of the paste are deposited on the current collector which is then allowed to dry thereby forming the cathode. The anode comprises metallic aluminum or metallic lithium. The separator comprises a porous material that prevents short circuit yet permitting passage of ion. The separator may be made from PTFE(polytetrafluoroethylene), PAN(polyacrylonitrile), glass fiber and/or PI (polyimide). The electrolyte is a low temperature molten salt, it may be formed from a mixture of imidazole salt and a main metal halogen(s). The imidazole salt is preferably an organic salt such as 1-methyl-3-ethylimidazolium chloride(EMIC). The metal halogen is preferably aluminum chloride(AlCl₃), sodium chloride (NaCl), lithium chloride(LiCl), and/or magnesium chloride(MgCl₂), The most preferred main metal halogen is AlCl₃ . Alternatively, the main metal halogen is a combination of metal halogens selected from a group consisting AlCl₃, LiCl, NaCl and MgCl₂. The metal halogen may be a combination of metal chloride for example a combination of aluminum chloride and Lithium chloride or aluminum chloride and sodium chloride. The mole ratio of main metal halogen / EMIC is from 1.1 to 2.2 and preferably 1.3. The casing is to provide mechanical protection from external impact. The material used to form the casing must not react with any of the material stored therein.

Intercalation of the cathode is resulted from charging of the battery and de-intercalation of the cathode that occurs during the discharge of the battery. To shorten the time for charging the battery, the intercalation in the cathode is improved by way of pre-intercalation. Pre-intercalation is made possible by the intercalation of ion of a support/auxiliary metal halogen which maintains the interlayer distance between basal planes in the cathode. The presence of the support metal halogen ion prevents dramatic change in space between the basal planes, such that the main metal halogen ion can easily intercalate or de-intercalate between every cycle life.

In the ionic liquid electrolyte, there are at least two kinds of metal halogen, one being the main metal halogen for intercalation and the support metal halogen responsible for the pre-intercalation, which is introduce to the ionic liquid as an additive. The support metal halogen is a metal halogen different from the main metal halogen with different/respective intercalation voltages. The difference of the intercalation voltage is preferred to be at least 0.5V. More importantly, such support metal halogen should have an intercalation voltage lower than that of the main metal halogen and as such it must comprise of a metal halogen different from that of the support metal halogen.

The intercalation of the support metal halogen at the cathode occurs before the normal operation of the battery. As such it can be understood as pre-intercalation which take place at a relatively low voltage i.e. below the operational voltage which is attributable to the charging and discharging voltage of the battery. The operational voltage is the voltage of the battery required for intercalation and deintercalation of the main metal halogen. This would normally be within the range of 1.0-2.45V. In most circumstances the pre-intercalation voltage is at least 0.4V below the lower limit of the operational voltage. If the pre-intercalation voltage is too close to the lower limit of the operational voltage, pre-intercalation of support metal halogen and intercalation of main metal halogen may occur simultaneously which may bring about disintegration of electrode. For de-intercalation of the support metal halogen to occur, the voltage required should be lower than the voltage for pre-intercalation. This would ensure no unintended, accidental de-intercalation of the support metal halogen.

During normal operation of the battery, charging usually start to occur at about 1.0V and peaks at around 2.5V depending on nature and characteristics of the electrodes and electrolyte. Before operational charging of the battery, the pre-intercalation of the support metal halogen ion is completed. The support metal halogen ions are pre-intercalated to facilitate the access of the main metal halogen ions during the operational charging when the main metal halogen ions enter the cathode.

During normal operation of the battery, discharging occurs when the main halogen ion de-intercalate from the cathode. Each de-intercalated main metal halogen ion takes up more electrons and move towards the negative electrode.

The halogen in the main and support metal halogens is selected from a group consisting F, Cl, Br and I.

The possible candidates of support metal halogens are SnCl₂, BiCl₃, GaCl₃ and ZnCl₂.

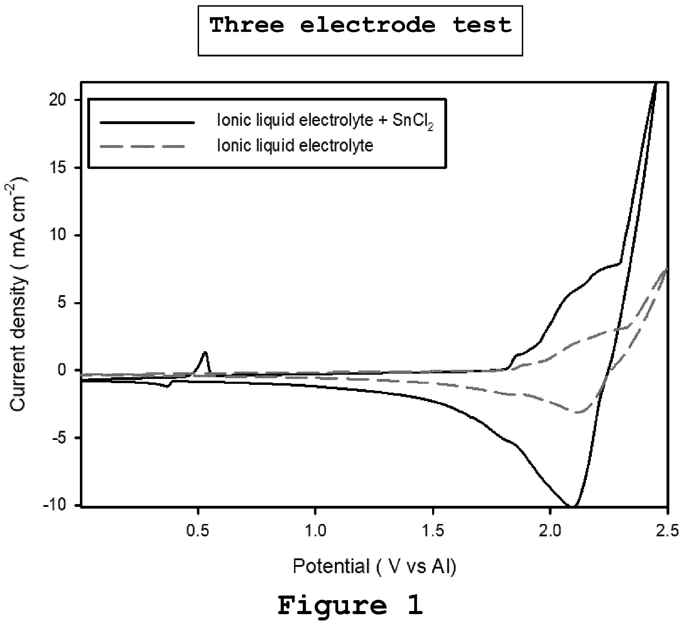

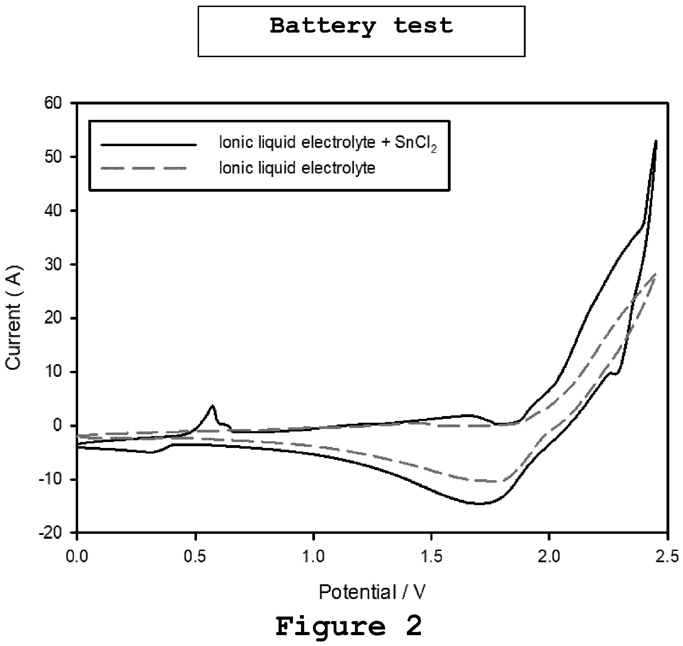

This can be more easily explained with reference to Figures 1 and 2.

In Figure 1, a three electrodes test Cycle Voltammetry (CV) plot is showed. The data of Cycle Voltammetry (CV) measurements is taken using Autolab PGSTAT 30 in a three electrode test system. It includes a pyrolytic graphite foil as a working electrode. The reference electrode and the counter electrode are aluminum foil. All of the electrodes were placed in a glass bottle with ionic liquid having a molar ratio AlCl_{3/}EMIC = 1.3 in the glove box and sealed with a screw cap. Different curves are used to represent the measurements taken when the ionic liquid is with 500ppm of SnCl₂ introduced as an additive and when the ionic liquid is without such additive. The scan rate is 10mV/s.

Figure 1 shows that the intercalation voltage of SnCl₂ is at 0.5V∼0.6V. Under normal circumstances, intercalation of the ion of support metal halogen SnCl₂ occurs before the main metal halogen intercalation take place at 1.85V.

The difference of the intercalation voltage between the support metal halogen and the main metal halogen is preferred to be at least 0.5V. As such, it is known as pre-intercalation. The voltage at the cathode is maintained at 0.55V for 1-60 min to allow sufficient time for pre-intercalation to occur at cathode. Once completed, de-intercalation of the support metal halogen ion is unlikely as the normal operational voltage at the cathode will not go as low as below 0.5V to result in de-intercalation.

In Figure 2, the Battery test Cycle Voltammetry (CV) plot after 8000 cycle life test is showed. The cathode is a mixture comprising 93.5% graphite, 5% SBR, 1%VGCF, 1.5%CMC coated on a molybdenum foil. The anode is aluminum foil. A glass fiber membrane is provided between the electrodes as the separator. The size of the cathode and anode is about 3X3cm. The electrolyte mixture comprises AlCl₃ as the main metal halogen and EMIC. The mole ratio of main metal halogen and 1-ethyl-3-methylimidazolium chloride is 1.3. The battery is assembled inside a well-controlled argon filled glove box with the electrolyte being filled. The support metal halogen is 500ppm of SnCl₂ introduced into the electrolyte as an additive. The amount of SnCl₂ should be less than 10000ppm.

Before Cycle life test (2.45V∼1.0V), according to the basics of figure 1 two-stage charging is performed. In the first stage, Potentionstat charging is performed at 0.55V for no more than 1 hour. The second is Galvanoststic charging to 2.45V. After 8000 cycles of charge and discharge, it can be seen from the figure 2 that the battery can have a good reversibility.

Therefore during Potentionstat charging, pre-intercalation of the support metal halogen ion occurs. In this example, the support metal halogen is SnCl₂. To ensure that ions of SnCl₂ form the supporting material between the basal plane of the cathode, the Potentiostat charging time should be within 1 hour and can be as fast as 1 min. The lower the concentration of the additive, the lesser the time is required for the pre-intercalation. The amount of pre-intercalated support metal halogen can be manipulated by adjusting the concentration of the additive and the charging time.

The pre-intercalation of the support metal halogen ion allows the main metal halogen ion to easily intercalate or de-intercalate between every cycle life.

During Galvanostatic charging to 2.45V, intercalation of the main metal halogen ion AlCl₄⁻ occurs at the cathode.

Al/graphite battery redox reactions during charging and discharging can be written as:
At the cathode: Cn + AlCl₄⁻ ⇄ Cn[AlCl_{4]} + e⁻
At the anode: 4 Al₂Cl₇⁻ + 3e⁻ ⇄ Al+ 7AlCl₇⁻

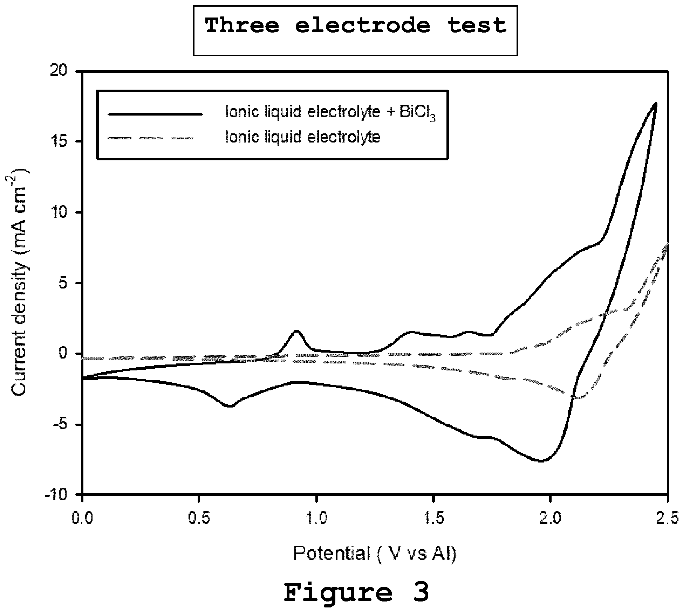

Referring to Figure 3 to 5, other additive metal halogen for example BiCl₃, GaCl₃ and ZnCl₂ may be used in replacement of SnCl₂.

Referring to Figure 3, a three electrodes test Cycle Voltammetry (CV) plot is showed. The data of Cycle Voltammetry (CV) measurements is taken using Autolab PGSTAT 30 in a three electrode test system. It includes a pyrolytic graphite foil as a working electrode. The reference electrode and the counter electrode are aluminum foil. All of the electrodes were placed in a glass bottle with ionic liquid having a molar ratio AlCl_{3/}EMIC = 1.3 in the glove box and sealed with a screw cap. Different curves are used to represent the measurements taken when the ionic liquid is with 1000ppm of BiCl₃ introduced as an additive and when the ionic liquid is without BiCl₃. The scan rate is 10mV/s.

The electrolyte mixture comprises AlCl₃ as the main metal halogen. BiCl₃ is introduced as a support metal halogen. The amount of BiCl₃ in the electrolyte should be in the range of 1000ppm to 10000ppm.

As shown in Figure 3, intercalation of BiCl₃ ion actually occurs at 0.9V while deintercalation of BiCl₃ ion occurs at 0.6V. Intercalation of the ion of support metal halogen BiCl₃ occurs before the main metal halogen intercalation. The voltage at the cathode is maintained at 1.3V for 1-60 min to allow sufficient time for pre-intercalation to occur at cathode. Once completed, the voltage at the cathode is adjusted to an operational voltage at around 1.5V to 2.45V. The de-intercalation of the support metal halogen ion at this stage is unlikely as the normal operational voltage at the cathode will not go as low as below 0.6V to result in de-intercalation.

The use of BiCl₃ is relatively less desirable when compared to SnCl₂ as the pre-intercalation voltage of BiCl₃ is very close to the intercalation voltage of the ion of the main metal halogen ion AlCl₃. The overall stability of the system is lower comparing to that of SnCl₂ / AlCl₃.

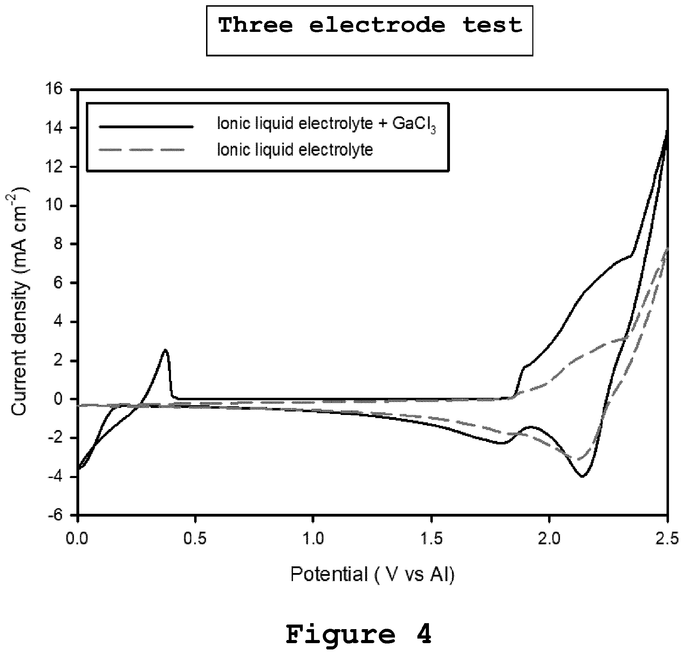

Referring to Figure 4, a three electrode test is performed.

The pyrolytic graphite foil as a working electrode. The reference electrode and the counter electrode are aluminum foil. All of the electrodes were placed in a glass bottle with ionic liquid having a molar ratio AlCl_{3/}EMIC = 1.3 in the glove box and sealed with a screw cap. Different curves are used to represent the measurements taken when the ionic liquid is with 5000ppm of GaCl₃ introduced as an additive and when the ionic liquid is without GaCl₃. The scan rate is 10mV/s.

The electrolyte mixture comprises AlCl₃ as the main metal halogen. GaCl₃ is introduced as a support metal halogen. The amount of GaCl₃ in the electrolyte should be in the range of 5000ppm to 10000ppm.

As shown in Figure 4, intercalation of GaCl₃ ion actually occurs at 0.4V while deintercalation of GaCl₃ ion occurs at 0.2V. Intercalation of the ion of support metal halogen GaCl₃ occurs before the main metal halogen intercalation. The voltage at the cathode is maintained at 0.5V for 1-60 min to allow sufficient time for pre-intercalation to occur at cathode. Once completed, the voltage at the cathode is adjusted to an operational voltage which is around 1.0V to 2.45V. The de-intercalation of the support metal halogen ion at this stage is unlikely as the normal operational voltage at the cathode will not go as low as below 0.2V to result in de-intercalation.

The arrangement in relation to Figure 4 is desired as the pre-intercalation voltage of GaCl₃ ion is more than 1V from that of the intercalation voltage of the ion of the main metal halogen AlCl₄⁻. The use of GaCl₃ is generally preferred except for its price which is higher than SnCl₂.

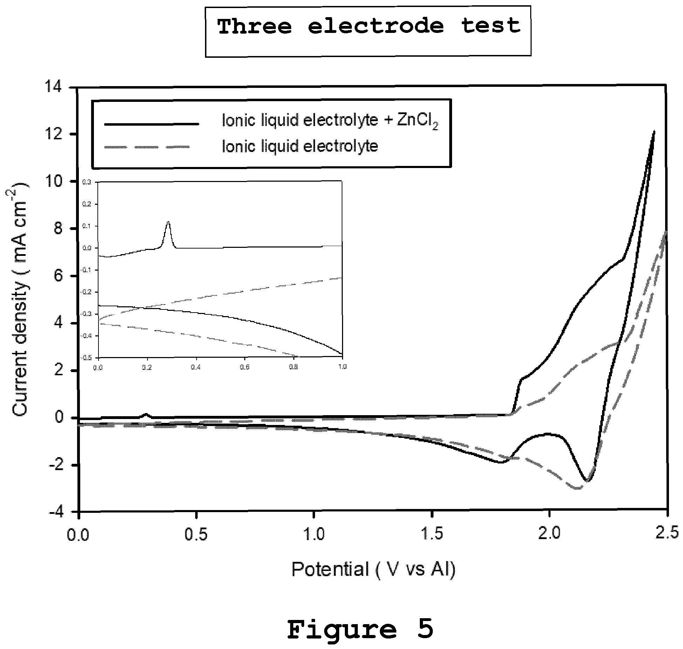

Referring to Figure 5, a three electrode test is performed. The pyrolytic graphite foil is used as a working electrode. The reference electrode and the counter electrode are aluminum foil. All of the electrodes were placed in a glass bottle with ionic liquid having a molar ratio AlCl_{3/}EMIC = 1.3 in the glove box and sealed with a screw cap. Different curves are used to represent the measurements taken when the ionic liquid is with 100ppm of ZnCl₂ introduced as an additive and when the ionic liquid is without ZnCl₂. The scan rate of the three electrode test is 10mV/s.

The electrolyte mixture comprises AlCl₃ as the main metal halogen. ZnCl₂ is introduced as a support metal halogen. The amount of ZnCl₂ in the electrolyte should be in the range of 100ppm to 5000ppm.

With reference to Figure 5, intercalation of ZnCl₂ ion actually occurs at 0.3V while deintercalation of ZnCl₂ ion occurs at 0.2V. Intercalation of the ion of support metal halogen ZnCl₂ occurs before the main metal halogen intercalation. The voltage at the cathode is maintained at 0.5V for 1-60 min to allow sufficient time for pre-intercalation to occur at cathode. Once completed, the voltage at the cathode is adjusted to an operational voltage which is 1.0V to 2.45V. The de-intercalation of the support metal halogen ion at this stage is unlikely as the normal operational voltage at the cathode will not go as low as below 0.2V to result in de-intercalation.

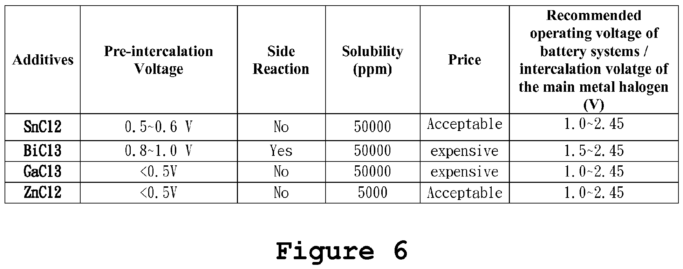

With reference to Figure 6, when considering the desirability of a metal halogen for use as a support metal halogen, balance between at least three criteria is required, including the solubility of the metal halogen, the intercalation voltage of the metal halogen ion and the possibility of undesirable side reaction. Industrially, we also take into account the price of the metal halogen.

The use of ZnCl₂ is less desired when compared to other metal halogen as listed in Figures 6 despite that there is no undesirable side reaction during charging and discharging of the battery and the intercalation voltage of ZnCl₂ is at least is sufficiently different from that of the intercalation voltage of ions of the main metal halogen which is AlCl₃ in the embodiment. The pre-intercalation of ZnCl₂ is less effective when compared to SnCl₂ as well as GaCl₃ and as a result, there is a rather low current density at 0.3V in Figure 5. This is because the solubility of ZnCl₂ in the electrolyte is relatively low at 5000ppm.

BiCl₃ is the least preferred amongst the four listed in the table of Figure 6 for acting as the support metal halogen despite its good solubility of 50000ppm. This is because the pre-intercalation voltage of ions of BiCl₃ (0.8-1.0V) is relatively close to the intercalation voltage of the main metal halogen (AlCl₃) in the embodiment which starts at 1.3V. There is a difference of about 0.3V to 0.5V. In that case, during intercalation of AlCl₄⁻, pre-intercalation of BiCl₃ may occur resulting in undesirable side reaction during charging and discharging of the battery. Moreover, BiCl₃ is relatively expansive.

By comparison, SnCl₂ is the most preferred support metal halogen for pre-intercalation when used in the AlCl_{3/}EMIC electrolyte. With reference to Figure 2 and Figure 6, the pre-intercalation voltage of ions of SnCl₂ is about 0.5-0.6V. The difference between the pre-intercalation voltage of ions of SnCl₂ and the intercalation voltage of ions of the main metal halogen which is AlCl₃ in the embodiment is more than 1V. Furthermore, there is no side reaction during charging and discharging of the battery and the solubility of SnCl₂ is at 500ppm, which is a reasonable solubility for the purpose of pre-intercalation at reasonable cost.

GaCl₃ is an acceptable alternative with a pre-intercalation voltage of less than 0.5V (around 0.3V) which is far from the intercalation voltage of ions of the main metal halogen which is AlCl₃ in the embodiment. It has good solubility of about 50000ppm and without side reaction during charging and discharging of the battery.

However it is relatively expansive to use.

The minimum preferred difference of the pre-intercalation voltage of the ion of the support metal halogen and the intercalation voltage of the ion of the main metal halogen should be at least 0.5V. In general, the greater the difference the better.

A draw back of the battery discussed above is the cost involved in using molybdenum foil as the current collector in the cathode.

In general, the cathode of the battery comprises a cathode (active) material applied to or supported on a current collector. The preferred current collector includes molybdenum and tantalum. The advantage of such materials is that there will be no or minimal side effect but the cost of using these materials is high.

Nickel is a possible substitute of Molybdenum and Tantalum but the undesirable side effect involved limits its application as a base material for cathode. More specifically, Nickel reacts with the AlCl₄⁻ ions in the electrolyte and corrodes. That said, Nickel is still considered a suitable substitute of Molybdenum and Tantalum because its resistivity is comparable to that of Molybdenum and closer to Tantalum than Molybdenum but the price is lowest amongst the three. Nickel has a resistivity (nΩ•m) of 69.3 nΩ•m and a general price of USD14,840 per ton, while Molybdenum has a resistivity of 53.4 nΩ•m and a general price of USD26,000 per ton and Tantalum has a resistivity of 131 nΩ•m and a price of USD178,574 per ton.

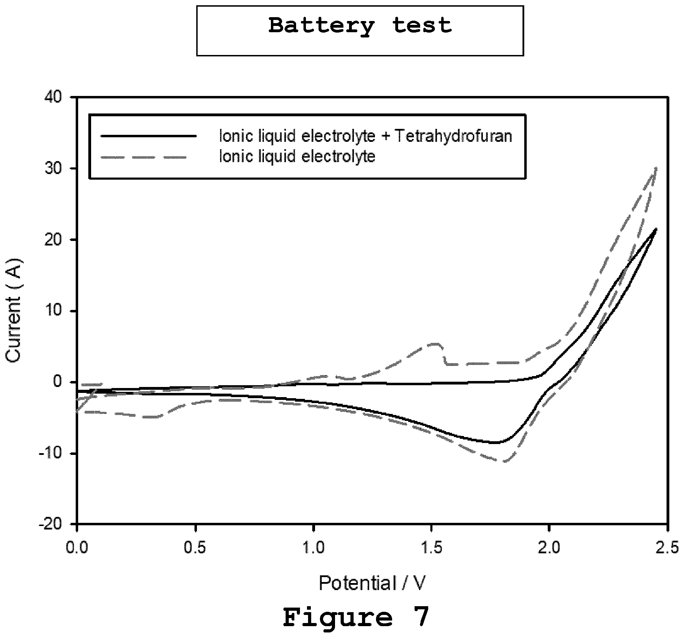

As shown in Figures 7 to 15, the Nickel electrons contribute to the peaks at the range of 0.8-1.5V. This will decrease the life cycle of the battery. Current collector must be electrochemically stable when in contact with the battery component during the potential operation window of the electrode. Continuous corrosion of current collector leads to an increase of the internal resistance of the battery, which causes a decline in the capacity. Corrosion of the current collector may result in short-circuit which affects the safety of the battery.

To mitigate the side effect, additive in the form of organic solvent or rare earth metal is applied to the electrolyte. The organic solvent may include cyclic ether, alkyl amide. More specifically, it may be Tetrahydrofuran(THF) or dimethylacetamide(DMAC). The rare earth metal may be in the form of rare earth metal halogen such as LaCl₃ or YCl₃. The organic solvent or rare earth metal ion may surround the Ni ion to lower the chances of contact between the Ni ion and the ions in the electrolyte.

In each of Figures 7, 10, 13,and 15, two curves are shown. The curve as shown in solid line shows the current at the battery during charging and discharging and when the electrolyte contains an additive. The dotted line curve shows the current at the battery during charging and discharging when the electrolyte does not contain the additive. In summary, the peak(s) at the range of about 0.8V to 1.5V in the dotted line curve is a result of the undesirable current generated by the electron produced by the reaction between Nickel with AlCl₄⁻ at the cathode. This peak(s) is flattened in the solid line curve when the additive is present in the electrolyte.

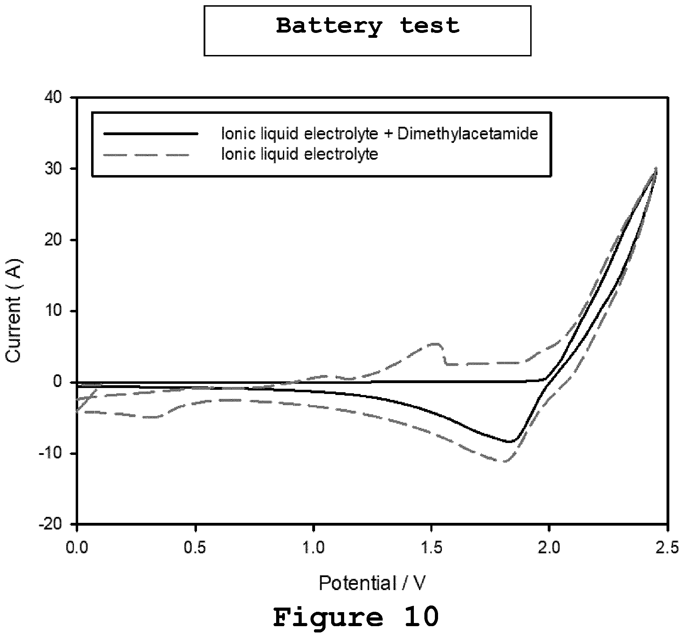

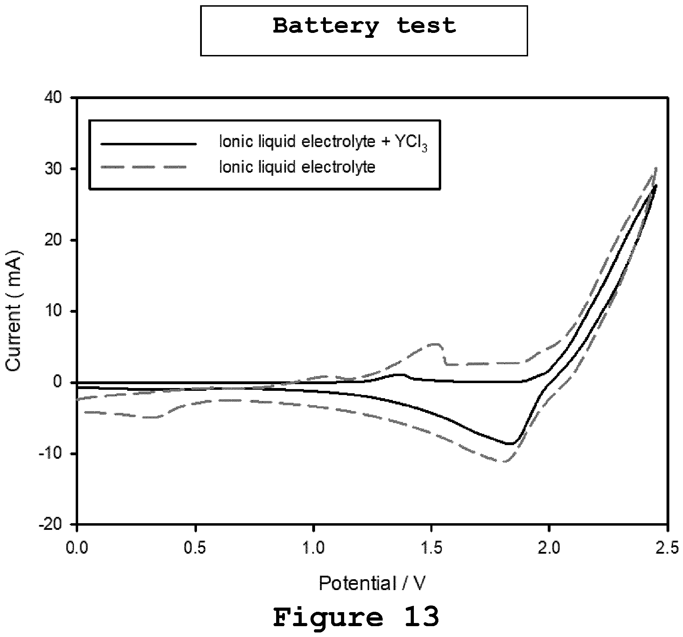

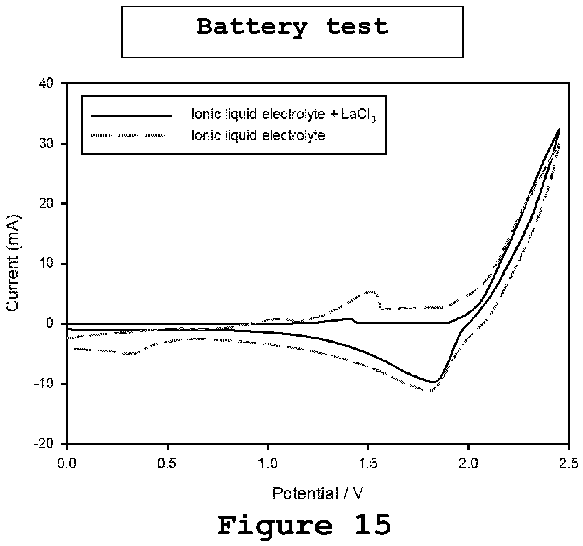

Figure 7 shows the comparative result with the use of THF. Figure 10 shows the comparative result with the use of DMAC. Figure 13 shows the comparative result with the use of YCl₃. Figure 15 shows the comparative result with the use of LaCl₃. In summary, the use of THF and DMAC are most preferred as the undesirable side effect in the form of current at the cathode resulting in the peaks at about 1.5V in the respective dotted line curves in Figures 7 and 10 are neutralized to a greater extent than the peaks at about 1.5V in the dotted line curves in Figures 13 and 15 when LaCl₃ or YCl₃ are used as the additive respectively.

In Figure 7, a battery test is performed. The battery has a cathode being formed from coating a mixture comprising graphite, PTFE, VGCF coating on a nickel foam base material. The anode comprises aluminum foil. The separator is formed from glass fiber. The electrolyte mixture comprises AlCl₃ as the main metal halogen and EMIC. The mole ratio of AlCl₃ / EMIC is 1.4. The battery is assembled inside a well-controlled argon filled glove box with the electrolyte being filled.

The current resulting from the electron produced by the reaction of Nickel with AlCl₄⁻ at the cathode is mitigated by the presence of THF introduced as an additive into the electrolyte.

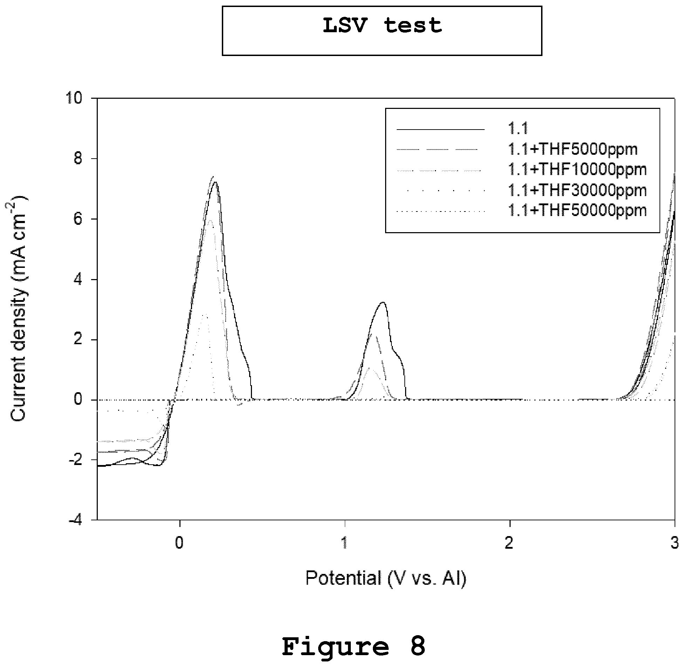

Referring to Figure 8, there is shown the scan results of a Linear Sweep Voltammetry (LSV) test with a sweep rate of 1mV/s. The linear sweep voltammetry (LSV) graph measures the current at the working electrode (cathode) resulted from the electrons provided by the side effect of Ni at different concentrations of THF (Oppm, 5000ppm, 10000ppm, 30000ppm and 50000ppm) by sweeping linearly in time the potential between the cathode and the reference electrode at room temperature. The working electrode (cathode) comprises Ni as the current collector, the reference electrode comprises Al and the electrolyte comprises a molar ratio AlCl₃/EMIC=1.1. The current is suppressed by the presence of THF. The suppression of the current as shown in the peak at the range of 0.8-1.5V increases with the amount of THF used. In other words, the peak decreases in magnitude with the amount of THF used.

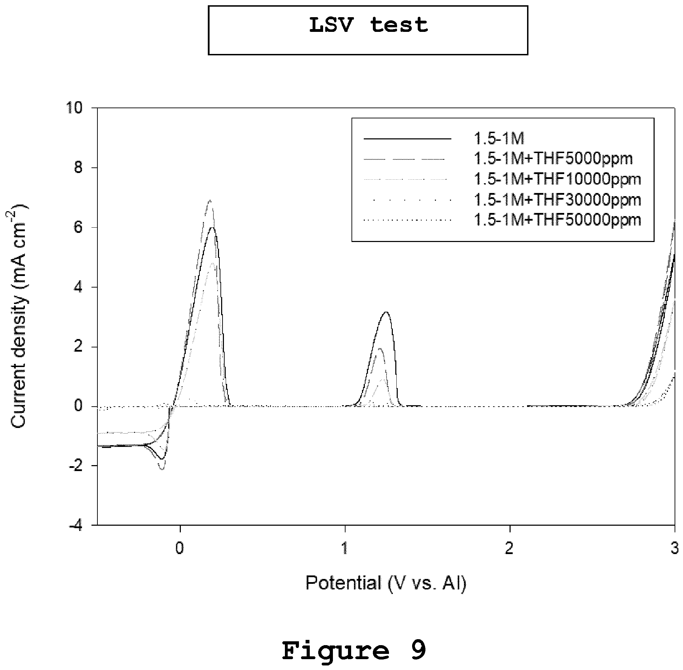

Figure 9 shows the scan results of a Linear Sweep Voltammetry (LSV) test with a sweep rate of 1mV/s. The linear sweep voltammetry (LSV) graph measures the current at the working electrode (cathode) resulted from the electrons provided by the side effect of Ni at different concentrations of THF (Oppm, 5000ppm, 10000ppm, 30000ppm and 50000ppm) by sweeping linearly in time the potential between the cathode and the reference electrode at room temperature. The working electrode (cathode) comprises Ni as the current collector, the reference electrode comprises Al and the electrolyte comprises a molar ratio AlCl_{3/}EMIC=1.5 and 1M of LiCl. The current is suppressed by the presence of THF. The suppression of the current as shown in the peak at the range of 0.8-1.5V increases with the amount of THF used. In other words, the peak decreases in magnitude with the amount of THF used.

Figures 8 and 9 together demonstrate that the ability of THF in suppressing the undesirable current resulting from Ni at the cathode remains unchanged despite the presence of a single main metal halogen or a combination of more than one main metal halogen as the electrolyte.

As discussed above, dimethylacetamide is another possible additive that would reduce and eventually neutralize or remove the side effect resulting from the reaction between Nickel and the AlCl₄⁻.

Referring to Figure 10, a battery test is performed on a battery with a cathode formed by coating a mixture of graphite, PTFE, VGCF coating on a nickel foam base material. The negative electrode is aluminum foil. The separator is a glass fiber. The electrolyte mixture comprises AlCl₃, the main metal halogen, and EMIC. The mole ratio of AlCl_{3/}EMIC is 1.4. The battery is assembled inside a well-controlled argon filled glove box with the electrolyte being filled.

5000ppm of dimethylacetamide is added to the electrolyte to suppress the side effect resulting from the reaction between Nickel and the AlCl₄⁻. The peaks at about 0.8-1.5V in Figure 10 is flattened when dimethylacetamide is added.

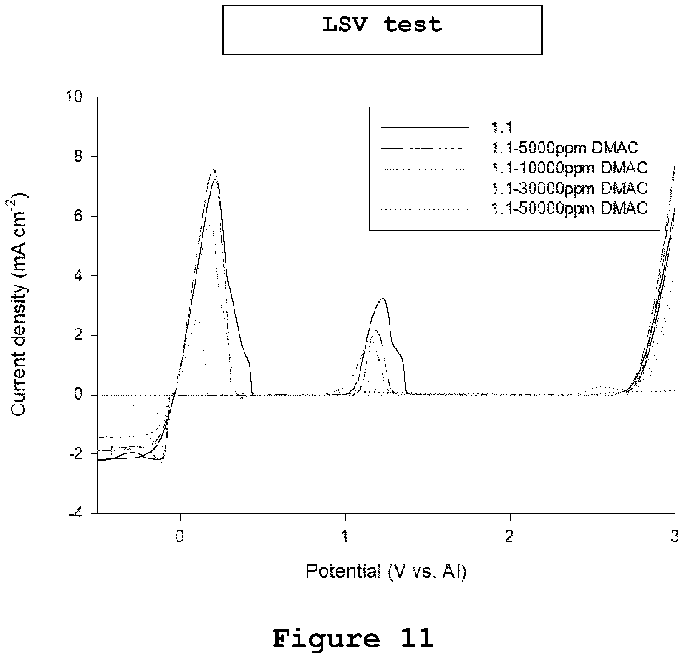

Referring to Figure 11, there is shown the scan results of a Linear Sweep Voltammetry (LSV) test with a sweep rate of 1mV/s. The linear sweep voltammetry (LSV) graph measures the current at the working electrode (cathode) resulted from the electrons provided by the side effect of Ni at different concentrations of DMAC (Oppm, 5000ppm, 10000ppm, 30000ppm and 50000ppm) by sweeping linearly in time the potential between the cathode and the reference electrode at room temperature. The working electrode (cathode) comprises Ni as the current collector, the reference electrode comprises Al and the electrolyte comprises a molar ratio AlCl₃/EMIC=1.1. The current is suppressed by the presence of DMAC. The suppression of the current as shown in the peak at the range of 0.8-1.5V increases with the amount of DMAC used. In other words, the peak decreases in magnitude with the amount of DMAC used. There is a substantially linear relationship between the suppression and the amount of DMAC within the range of 0-50000ppm.

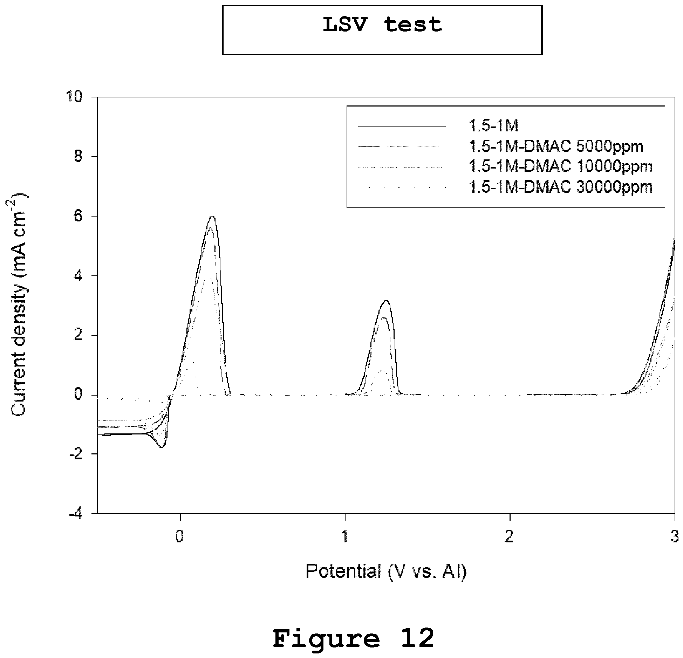

Figure 12 shows the scan results of a Linear Sweep Voltammetry (LSV) test with a sweep rate of 1mV/s. The linear sweep voltammetry (LSV) graph measures the current at the working electrode (cathode) resulted from the electrons provided by the side effect of Ni at different concentrations of DMAC (Oppm, 5000ppm, 10000ppm, and 30000ppm) by sweeping linearly in time the potential between the cathode and the reference electrode at room temperature. The working electrode (cathode) comprises Ni as the current collector, the reference electrode comprises Al and the electrolyte comprises a molar ratio AlCl_{3/}EMIC=1.5 and 1M of LiCl. The current is suppressed by the presence of DMAC. The suppression of the current as shown in the peak at the range of 0.8-1.5V increases with the amount of DMAC used. In other words, the peak decreases in magnitude with the amount of DMAC used.

Figures 11 and 12 together demonstrate that the ability of DMAC in suppressing the undesirable current resulting from Ni at the cathode remains unchanged despite the presence of a single main metal halogen or a combination of more than one main metal halogen as the electrolyte.

Referring to Figure 13, a battery test is performed on a battery with a cathode formed by coating a mixture of graphite, PTFE, VGCF coating on a nickel foam base material. The negative electrode is aluminum foil. The separator is a glass fiber. The electrolyte mixture comprises AlCl₃, the main metal halogen, and EMIC. The mole ratio of AlCl_{3/}EMIC is 1.4.

The battery is assembled inside a well-controlled argon filled glove box with the electrolyte being filled.

500ppm of YCl₃ is added to the electrolyte to suppress the side effect resulting from the reaction between Nickel and the AlCl₄⁻. The peaks at 0.8V - 1.5V are substantially reduced after the addition of YCl₃.

Intercalation and de-intercalation of YCl₃ do not occur during the operational voltage of the battery.

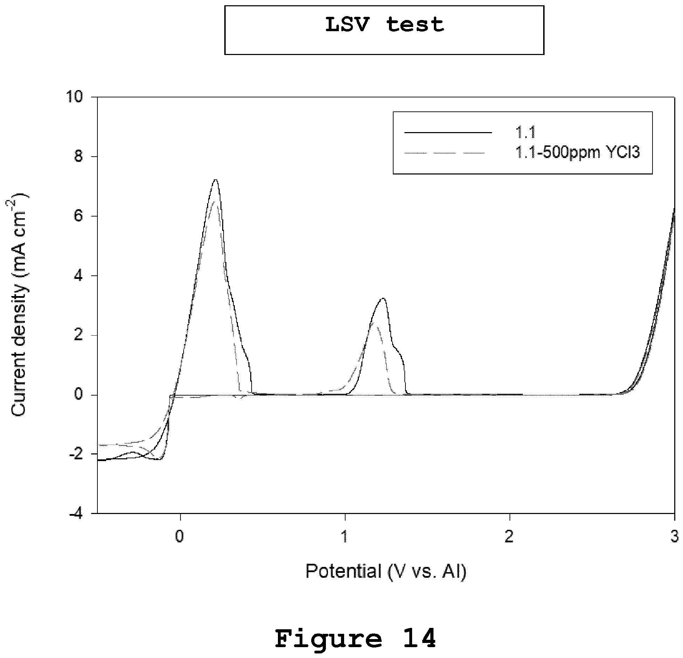

Referring to Figure 14, there is shown the scan results of a Linear Sweep Voltammetry (LSV) test with a sweep rate of 1mV/s. The linear sweep voltammetry (LSV) graph measures the current at the working electrode (cathode) resulted from the electrons provided by the side effect of Ni at different concentrations of YCl₃ (0ppm and 500ppm) by sweeping linearly in time the potential between the cathode and the reference electrode at room temperature. The working electrode (cathode) comprises Ni as the current collector, the reference electrode comprises Al and the electrolyte comprises a molar ratio AlCl₃/EMIC=1.1. The current is suppressed by the presence of YCl₃.

Referring to Figure 15, a battery test is performed on a battery with a cathode formed by coating a mixture of graphite, PTFE, VGCF coating on a nickel foam base material. The negative electrode is aluminum foil. The separator is a glass fiber. The electrolyte mixture comprises AlCl₃, the main metal halogen, and EMIC. The mole ratio of AlCl_{3/}EMIC is 1.4.

The battery is assembled inside a well-controlled argon filled glove box with the electrolyte being filled.

500ppm of LaCl₃ is added to the electrolyte to suppress the side effect resulting from the reaction between Nickel and the AlCl₄⁻. The peaks at 0.8V - 1.5V are substantially reduced after the addition of LaCl₃.

Intercalation and de-intercalation of LaCl₃ do not occur during the operational voltage of the battery.

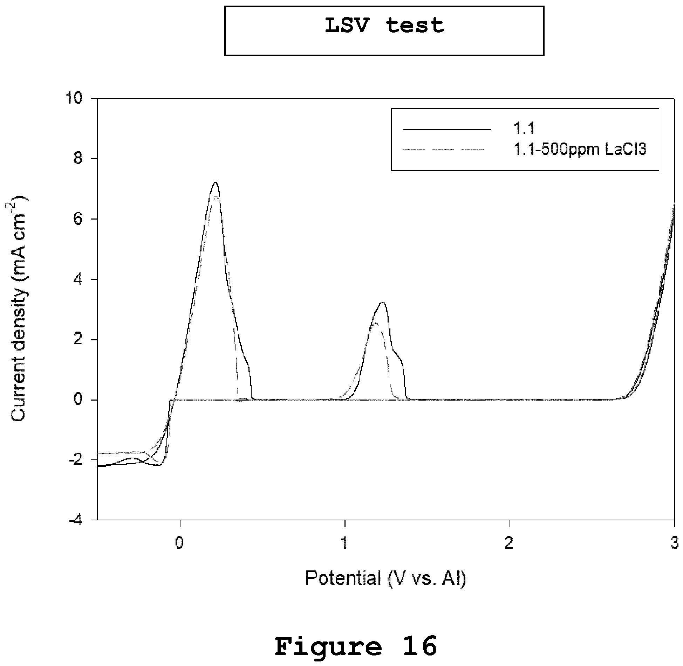

Referring to Figure 16, there is shown the scan results of a Linear Sweep Voltammetry (LSV) test with a sweep rate of 1mV/s. The linear sweep voltammetry (LSV) graph measures the current at the working electrode (cathode) resulted from the electrons provided by the side effect of Ni at different concentrations of LaCl₃ (0ppm and 500ppm) by sweeping linearly in time the potential between the cathode and the reference electrode at room temperature. The working electrode (cathode) comprises Ni as the current collector, the reference electrode comprises Al and the electrolyte comprises a molar ratio AlCl₃/EMIC=1.1. The current is suppressed by the presence of LaCl₃.

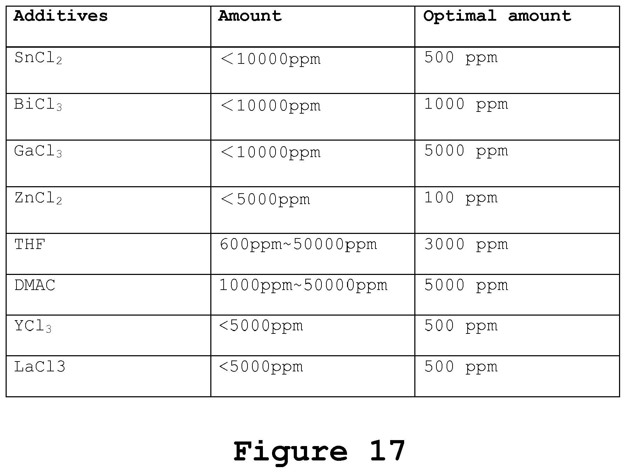

As shown in Figure 17, the amount of THF introduced into the electrolyte is at least 600ppm to result in a noticeable suppression of the side effect of the Nickel base. The optimum range is around 2000ppm - 5000ppm and the optimum amount would be 3000ppm. Suppression of side effect is not possible when the amount of THF is below 500ppm. However if too much of THF is added into the electrolyte, charging and discharging of the battery becomes adversely affected. Any amount more than 50000ppm would hinder the charging and discharging of the battery.

As shown in Figure 17, the amount of dimethylacetamide introduced into the electrolyte is at least 1000ppm to result in a noticeable suppression of the side effect of the Nickel base. The optimum range is around 4000ppm - 6000ppm and the optimum amount would be 5000ppm.

Suppression of side effect is not possible when the amount of dimethylacetamide is below 1000ppm. However if too much of dimethylacetamide is added into the electrolyte, charging and discharging of the battery becomes adversely affected. Any amount more than 50000ppm would hinder the charging and discharging of the battery.

As shown in Figure 17, the amount of YCl₃ introduced into the electrolyte is less than 5000ppm and the optimal amount is 500ppm for suppressing the side effect of the Nickel base. Suppression of side effect is not possible when the amount of YCl₃ is below 50ppm. However if too much of YCl₃ is added into the electrolyte, charging and discharging of the battery becomes adversely affected. Any amount more than 5000ppm would hinder the charging and discharging of the battery.

As shown in Figure 17, the amount of LaCl₃ introduced into the electrolyte is less than 5000ppm and the optimal amount is 500ppm for suppressing the side effect of the Nickel base. Suppression of side effect is not possible when the amount of LaCl₃ is below 50ppm. However if too much of LaCl₃ is added into the electrolyte, charging and discharging of the battery becomes adversely affected. Any amount more than 5000ppm would hinder the charging and discharging of the battery.

The invention has been given by way of example only, and various other modifications of and/or alterations to the described embodiment may be made by persons skilled in the art without departing from the scope of the invention as specified in the appended claims.

## Claims

1. A metal-ion energy storage system comprising:
positive and negative electrodes,
a separator is provide therebetween the positive and negative electrodes, an electrolyte formed from a mixture of imidazole salt and a main metal halogen,
wherein the electrolyte further includes an additive other than the main metal halogen.

2. The metal-ion energy storage system as claimed in claim 1, wherein the positive electrode comprises a current collector and at least one active material.

3. The metal-ion energy storage system as claimed in claim 2, wherein the current collector is nickel and the active material is selected from a group consisting graphite, Mxene, LiFePO₄, LiMnO₂, LiMn₂O₄, Li₃V₂(PO₄)₃ and Na₃V₂(PO₄)₃.

4. The metal-ion energy storage system as claimed in claim 1, wherein the separator is a porous membrane which is made from a material selected from a group consisting PTFE, PAN, glass fiber and PI.

5. The metal-ion energy storage system as claimed in claim 1, wherein the main metal halogen comprises a metal halogen selected from a group consisting AlCl₃, LiCl, NaCl and MgCl₂;
optionally, the main metal halogen is a combination of metal halogens selected from a group consisting AlCl₃, LiCl, NaCl and MgCl₂.

6. The metal-ion energy storage system as claimed in claim 1, wherein the main metal halogen comprises AlCl₃ and the imidazole salt comprises EMIC, the molar ratio of AlCl_{3/}EMIC is 1.1∼2.2.

7. The metal-ion energy storage system as claimed in claim 1, wherein the additive comprises at least one support metal halogen having an intercalation voltage smaller than that of the main metal halogen;
optionally, wherein halogen in the main and support metal halogens is selected from a group consisting F, Cl, Br and I.
optionally, wherein the support metal halogens are selected from a group consisting SnCl₂, BiCl₃, ZnCl₂ and GaCl₃ ;
optionally, wherein the amount of SnCl₂, BiCl₃ or GaCl₃ used as an additive is at or below 10000ppm respectively;
optionally, wherein the amount of ZnCl₂ used as an additive is at or below 5000ppm.

8. The metal-ion energy storage system as claimed in claim 1, wherein the additive comprises a rare earth halogen;
optionally, wherein the rare earth halogen is selected from a group consisting YCl₃ and LaCl₃;
optionally, wherein the amount of YCl₃ used as an additive is at or below 5000ppm;
optionally, wherein the amount of LaCl₃ used as an additive is at or below 5000ppm.

9. The metal-ion energy storage system as claimed in claim 1, wherein the additive comprises an organic solvent;
optionally, wherein the organic solvent is selected from a group consisting cyclic ether and alkyl amide;
optionally, wherein the cyclic ether comprises THF;
optionally, wherein the amount of THF used as an additive is 600ppm-50000ppm;
optionally, wherein the alkyl amide comprises Dimethylacetamide (DMAC);
optionally, wherein the amount of DMAC used as an additive is 1000ppm-50000ppm

10. The metal-ion energy storage system as claimed in claim 1, wherein the additive comprises a mixture of any two or more of the additive selected from a group consisting a support metal halogen, a rare earth halogen and an organic solvent.

11. The metal-ion energy storage system as claimed in claim 1 wherein the negative electrode comprises Aluminum.
